Europäisches Patentamt

European Patent Office

Office européen des brevets

(19)

(11) Publication number: **0 377 317 B1**

# EUROPEAN PATENT SPECIFICATION

(45) Date of publication of patent specification: **24.08.94**   (51) Int. Cl.⁵: **C04B 35/80**

(21) Application number: **89313562.4**

(22) Date of filing: **22.12.89**

(54) Ceramics composite article and method of making same.

(30) Priority: **28.12.88 JP 329427/88**
**01.03.89 JP 46619/89**
**28.04.89 JP 110378/89**
**28.04.89 JP 110379/89**
**28.04.89 JP 110380/89**
**28.04.89 JP 110381/89**
**28.04.89 JP 110382/89**

(43) Date of publication of application:
**11.07.90 Bulletin 90/28**

(45) Publication of the grant of the patent:
**24.08.94 Bulletin 94/34**

(84) Designated Contracting States:
**DE ES FR GB IT SE**

(56) References cited:
**EP-A- 0 184 837**
**EP-A- 0 240 177**
**EP-A- 0 296 133**
**WO-A-88/07889**
**WO-A-89/04735**

**CHEMICAL ABSTRACTS, vol. 107, no. 22, November 1987, page 358, abstract no.203931e; & JP-A-62 202 872 (SUMITOMO)**

(73) Proprietor: **JAPAN METALS & CHEMICALS CO., LTD.**
**No. 8-4, Koami-cho**
**Nihonbashi**
**Chuo-ku**
**Tokyo 103 (JP)**

(72) Inventor: **Matsuda, Toshitsugu**
**No. 1727-3 Ohmama**
**Ohaza**
**Ohmama-cho Yamada-gun Gunma-ken (JP)**
Inventor: **Saitoh, Sinichi**
**No. 4-41, Naetsu-cho**
**Tsuruoka-shi Yamagata-ken (JP)**
Inventor: **Yonezawa, Takao**
**No. 1-13-23, Nakayama**
**Ichikawa-shi Chiba-ken (JP)**
Inventor: **Sakai, Chorji**
**No. 3-16-1, Miyagidai**
**Funabashi-shi Chiba-ken (JP)**
Inventor: **Abe, Katsuyuki**
**No. 5-12-9, Asagayakita**
**Suginami-ku Tokyo (JP)**
Inventor: **Minamizawa, Masatoshi**
**No. 4-21-15, Hikarigaoka**
**Sakata-shi, Yamagata-ken (JP)**

JOURNAL OF MATERIALS SCIENCE/LETTERS, vol. 6, no. 11, November 1987; J. KANDORIet al.: SiC whisker reinforced Si3N4 composites"

CHEMICAL ABSTRACTS, vol. 108, no. 24, June 1988, page 286, abstract no.209059u; & JP-A-63 042 807 (TOYOTA MOTOR CORP.)

Inventor: **Sato, Kazuki**
**No. 3, Asagake,**
**Kitameaza,**
**Ohaza,**
**Yuzamachi,**
**Akumi-gun, Yamagata-ken (JP)**

(74) Representative: **Crouch, David John et al**
**Bromhead & Co.**
**19 Buckingham Street**
**London WC2N 6EF (GB)**

## Description

The present invention relates to a method of making ceramics and whiskers or platelets composites, and articles such as a cylinder liner for an automobile engine, a pipe coupling, a stoke, a heater tube and a pot used for ball milling, especially to high strength and high toughness ceramics formed and sintered under normal pressure.

A technical development in ceramics has made it possible to use ceramics in conventionally unthinkable applications such as automobile engine parts, bearings and cutting tools.

However, ceramics have essentially a "brittle" property, which limits their applications.

JP-A-58/104069 and JP-A-62/265173 relate to a ceramics and short fibres composite produced by a hot press method or an HIP-method.

But the hot press method or the HIP-method requires large scale production facilities, is expensive, and has a problem that it is difficult to produce articles with complicated shapes, such as tubular objects.

The present invention seeks to provide a ceramic article of high strength and superior toughness.

The present invention is accordingly directed to a method of making a ceramic composite article as described in claim 1 or claim 3. Further advantageous features are described in sub-claims 2 and 4.

By such a method it is possible to make a ceramic article, by forming and sintering, of high strength and superior toughness under normal pressure without using a hot press method or an HIP-method. Forming and sintering which take place under normal pressure, make it possible to produce ceramics of high strength, superior toughness and with complicated shapes cheaply, which will result in further more extended applications for such ceramics.

Examples of methods of the present invention are illustrated by the accompanying drawings, in which:

Figures 1(A), (B), and (C) are diagrams of a ceramic article made by a method embodying the present invention;

Figure 2 is a diagram illustrating the orientation of whiskers in a green body formed from a slip with a viscosity of 0.3 Nm-$^2$s (3 poise) and below in a method embodying the present invention;

Figure 3 shows a diagram of a comparative example illustrating the orientation of whiskers in a green body formed from a slip with a viscosity of about 1 Nm-$^2$s (10 poise);

Figure 4 shows a diagram of a comparative example illustrating the orientation of whiskers in a green body formed from a slip with a viscosity of about 0.5 Nm$^{-2}$s (5 poise);

Figure 5 is a diagram illustrating a crucible that may be used in a method embodying the present invention;

Figures 6(A), (B) and (C) are diagrams illustrating the orientation of platelets in a ceramic article made by a method embodying the present invention;

Figure 7 is a diagram illustrating the orientation of the platelets when using a slip with a viscosity of above 0.5 Nm$^{-2}$s (5 poise);

Figure 8 is a diagram illustrating the shape of a mould in which a cylinder liner is made of ceramic by a method embodying the present invention;

Figure 9 is a diagram illustrating the shape of a three-way pipe coupling;

Figures 10(A), (B) and (C) are diagrams illustrating the orientation of whiskers in a ceramic pipe coupling made by a method embodying the present invention, wherein (A) is a diagram of a two-way coupling, (B) is an axial sectional view of the coupling shown in (A), and (C) is a diagram of the coupling in the plane Y-Y in (A) on an enlarged scale;

Figure 11 is an elevational sectional view of an example of low pressure casting apparatus using a ceramic stoke made by a method embodying the present invention; and

Figure 12 is a diagram illustrating an example of pot mills used for making high quality powder for ceramics.

In a ceramic composite article made by a method embodying the present invention, whiskers are dispersed in a matrix. The composite may include fibres of silicon carbide which are very strong with a tensile strength of about $3 \times 10^8$ kgm$^{-2}$ (300 kg/mm$^2$). Alumina fibres and carbon fibres are also very strong. In the strict sense of the word a whisker means a needle-like single crystal, but since also short polycrystalline silicon carbide fibres, short alumina fibres and short carbon fibres are often called whiskers, "whisker" is a general term for the above mentioned short fibres in this specification.

According to the present invention, short fibres of silicon carbide about 0.1 - 1 $\mu$m in diameter and 5-100 $\mu$m in length are used as whiskers. Materials (for example "TOKAWHISKER"-tradename-made by TOKAI CARBON CO., LTD.) are available on the market for these whiskers. Similarly for long silicon carbide fibres, materials on the market (for example NIKARON-tradename-made by NIHON CARBON CO., LTD.) can be used by cutting them and making all the fibres of uniform length for example by means of

3

sedimentation. Whiskers of under 5 $\mu$m in length improve the toughness of ceramic articles only a little because of their low aspect ratio. Whiskers of over 100 $\mu$m in length become tangled easily and thereby form inhomogenoeus network structures in a green body described later. The amount of whiskers is preferably 5 - 30% by volume. An amount of under 5% by volume improves the toughness of ceramics articles only a little, and in an amount of over 30% by volume the whiskers become tangled easily and thereby form inhomogeneous network structures in a green body, which makes it difficult to produce dense ceramic composite articles having for example a relative density of 90% or above.

In a ceramic composite article produced by a method according to the present invention, dispersed whiskers are oriented parallel to the outer surface of the ceramic article and also randomly in two-dimensions over the whole thickness from the outer surface to the inner surface of the ceramic article. Such ceramic composite articles may be used as structural parts having the shapes of pipes, containers, plates, etc. of 20 mm and below in thickness.

Figure 1 is a diagram illustrating dispersed whiskers in a ceramic composite pipe made by a method embodying the present invention, wherein (A) is a general view, (B) is a vertical cross-sectional view and (C) is an enlarged view in the plane X-X of (A). In Figure 1(B) a ceramic composite article 1 is shown with dispersed whiskers 2 oriented schematically parallel to the outer surface 5 of the ceramic article over the whole thickness from the outer surface 5 to the inner surface 4 of the ceramic article in Figure 1(A). Over 80% of whiskers are, for example, oriented in an inclined angle of 30° and below, more preferably 15°, to the outer surface 5. Whiskers 2 are, as shown in Figure 1(C), oriented randomly in two-dimensions in the plane parallel to the outer surface 5 such as in the X-X plane of Figure 1(A).

As mentioned above, the ceramic composite articles are used as structural parts. For example, ceramic pipes used as structural parts are often damaged because of tensile stress in the directions of the arrows P and Q as well as in the combined direction of P and Q. However, they are seldom damaged because of tensile stress in the direction of thickness shown by the arrow R. When a hot gas is passed through the pipe shown in Figure 1(A), the inner surface 4 of the pipe is heated and expanded thermally, and tensile stress is applied to the outer surface 5 of the pipe in the direction of P and Q. However, the tensile stress applied to the matrix 3 is reduced because of the tensile stress resistance of high strength whiskers, which results in the prevention of cracks. Even if micro-cracks 6 or 7 are produced in the matrix 3 in Figure 1(B) or (C), these cracks 6 or 7 stop growing when they reach the whiskers 2. The whiskers oriented parallel to the outer surface of a ceramic articles and randomly in two-dimensions protect the matrix most effectively from the tensile stress applied to the surface of a ceramics article. Such ceramic composite articles thus have superior toughness, because all the dispersed whiskers are oriented parallel to the outer surface of the ceramic article and randomly in two-dimensions over the whole thickness from the outer surface to the inner surface of the ceramic article.

Whisker-ceramics composite articles generally have a low density if no special means are taken at the time of their production. This easily impairs their strength and toughness because of many defects contained therein. As described later, ceramic composite articles made by a method embodying the present invention have a high strength and a superior toughness because they are produced by a method by which a high relative density of 90% and above can be obtained and defects can be decreased.

In one method embodying the present invention, a slip with a viscosity of 0.30 Nm$^{-2}$s (3.0 poise) and below is made by dispersing whiskers and ceramic powder in a dispersion medium. This slip is poured into a porous mould, and a green body with a relative density of 60% and above is formed under normal pressure. The viscosity may be measured by a rotary viscometer which was calibrated with a standard liquid for calibrating viscometers according to JIS Z 8809. If the mould is vibrated when the slip is poured into the mould or immediately thereafter, preferable results can be obtained.

A slip with a viscosity of 0.30 Nm$^{-2}$s (3.0 poise) and below is made for example be adding water to a mixture comprising 10 parts by weight of silicon carbide whiskers with a diameter of about 0.5 $\mu$m and a length of about 30 $\mu$m, 75 parts by weight of silicon nitride powder with a granular size of about 1.0 $\mu$m and 15 parts by weight of a cordierite-group-sintering aid, and stirring the mixture sufficiently. This slip is poured into a gypsum mould 5 cm wide, 5 cm long and 4 cm deep (in this example a gypsum mould having a bottom made of gypsum and side walls made of polyvinyl chloride was used), to a depth of 10 mm. Thereafter the rest of the slip is removed and drying is performed for 24 hours, thereby obtaining a plate-like green body with a density of about 65%.

Figure 2 is a scheme showing the orientation of the whiskers in the green body cast from the slip with a viscosity of 0.30 Nm$^{-2}$s (3.0 poise) and below. In Figure 2 dispersed whiskers 2 of silicon carbide are oriented schematically parallel to the outer surface of the green body (the bottom of the gypsum mould) a, b, c, d and uniformly at random in two-dimensions over the whole thickness of the green body. A ceramic composite article is obtained by sintering this green body for example to 1700°C for 3 hours under normal

4

pressure 0.1 to 1 MPa (1 - 10 atm).

At the time of sintering the whiskers of silicon carbide do not change their orientation. Accordingly the ceramic composite article produced by sintering the green body in Figure 1 becomes a ceramic composite article whose whiskers are dispersed in the matrix schematically parallel to the outer surface of the ceramics and at random in two-dimensions over the whole thickness of the ceramic article from the outer surface to the inner surface thereof.

This ceramic composite article, using a green body with a relative density of 60% and above, moulded from a slip with a viscosity of 0.30 $Nm^{-2}s$ (3.0 poise) and below is dense with its relative density of 90% and above, has a superior toughness, shows a uniform shrinkage factor in its thickness direction upon sintering, and is a ceramic composite containing no macro-defects such as macropore and whiskers agglomerate.

The present inventor et al. tried to produce whiskers-ceramics composites using several slips with different viscosities. For example, a slip with a viscosity of about 1.00 $Nm^{-2}s$ (10.0 poise) was made by adding a little CMC (a binder which improves the strength of a green body) to the same slip as in Figure 2 and mixing them sufficiently. Using this slip, a green body was moulded under the same conditions as in Figure 2. The green body obtained had a relative density of about 50%.

Figure 3 is a scheme showing the orientation of the whiskers of a green body using a slip with a viscosity of about 1 $Nm^{-2}s$ (10 poise). As shown in Figure 3, dispersed whiskers 2 are oriented randomly in three-dimensions. Since the whiskers oriented as shown in Figure 3 become tangled with each other and the slip is insufficiently filled, the relative density of the green body is low, and therefore the relative density of the sintered composite is also low, so that no high strength ceramic composite can be obtained. And a slip with a viscosity of about 0.50 $Nm^{-2}s$ (5.0 poise) was made for example by adding a regulated amount of CMC to the same slip as in Figure 2 and mixing them sufficiently. Using this slip a green body was moulded under the same conditions as in Figure 2. The obtained green body had a relative density of about 62%.

Figure 4 is a scheme showing the orientation of the whiskers of a green body using a slip with a viscosity of about 0.50 $Nm^{-2}s$ (5.0 poise). As shown in Figure 4, dispersed whiskers 2 are oriented at first sight, schematically the same as in Figure 2, schematically parallel to the outer surface of the green body (the bottom of the gypsum mould) of face a, b, c, d and at random in two-dimensions. This green body made from a slip with a viscosity of about 0.50 $Nm^{-2}s$ (5.0 poise) was sintered at 1700°C for 3 hours, thereby obtaining a ceramics composite. At first sight the orientation of the whiskers in this ceramic composite was similar to that of the green body in Figure 2 using a slip with a viscosity of 0.30 $Nm^{-2}s$ (3.0 poise) and below. However, this green body made from a slip with a viscosity of 0.50 $Nm^{-2}s$ (5.0 poise) showed a largely scattering shrinkage factor in the thickness direction at the sintering, and may defects were observed in the ceramic composite after sintering.

In the foregoing the method was described with respect to green bodies and sintered ceramic composit with whiskers of silicon carbide. However, according to the knowledge of the preset inventor et al. the same phenomena are observed even if other materials are used as whiskers or matrix. Thus, when using a slip with a viscosity of 1 $Nm^{-2}s$ (10 poise) and above, no high strength ceramics can be obtained by compositing with whiskers because of a low relative density of a green body or a sintered ceramics. However, using a slip with a viscosity of about 0.5 $Nm^{-2}s$ (5 poise), a ceramics can be obtained which has a high relative density and whose whiskers are oriented schematically parallel to the outer surface of a sintered ceramic article and randomly in two-dimensions. But this ceramic composite article shows no superior strength or toughness because it contains many defects.

The reason why many defects are contained in the ceramic composite when using a slip with a viscosity of about 0.5 $Nm^{-2}s$ (5 poise) is considered as follows: When using a slip with a viscosity of about 0.5 $Nm^{-2}s$ (5 poise), the orientation of whiskers in the green body seems to be similar to that in Figure 2 at first sight, but the whiskers are dispersed still insufficiently uniformly. The whiskers form network structures in a green body, however, using a slip with a viscosity of about 0.5 $Nm^{-2}s$ (5 poise) the network structures are not formed uniformly. If a green body having non-uniformly formed network structures is sintered, shrinkage factors are different between dense formed and coarse formed network structures, and defects are caused by this difference.

When using a slip with a viscosity of 0.3 $Nm^{-2}s$ (3 poise) and below, the green body shrinks uniformly in the thickness direction at the sintering, and defects are hard to produce in a sintered ceramic article. This is probably because network structures of the whiskers, when using a slip with a viscosity of 0.3 $Nm^{-2}s$ (3 poise) and below, are formed more uniformly than those at a viscosity of 0.5 $Nm^{-2}s$ (5 poise), and because the shrinkage factor in the thickness direction at the sintering becomes more uniform.

In a composite ceramic article made by a method embodying the present invention comprising a matrix in which platelets are dispersed, commercially available platelets of hexagonal silicon carbide with a thickness of about 0.5 - 5 $\mu$m and a diameter of 20 - 70 $\mu$m (Trade name: Silicon Carbide Platelet, made by AMERICAN MATRIX CO., LTD.) may be used. Such platelets have a very high strength.

And for example, since hexagonal boron nitride has similar crystal structures to those of graphite, the powder thereof essentially comprises platelets, and boron nitride powders of various particle sizes are commercially available, then they can be also used as platelets.

As a matrix material, for example, silicon nitride powder with a mean particle diameter of about 1 $\mu$m (Trade name: SNP-8S, made by JAPAN METALS & CHEMICALS CO., LTD.) is commercially available and can be used as a matrix material for the ceramics article.

The plate surfaces of the dispersed platelets are oriented in the same direction as the outer surfaces of the ceramics article, that is, parallel thereto, and have a relative density of 85% and above after sintering.

Figures 6(A), (B) and (C) are descriptive views of the orientation of the platelets in a ceramics article. (A) shows the outer surfaces of a ceramics article, and (B) is a longitudinal sectional view. The platelets 10 are dispersed in the matrix, with the plate surfaces thereof being oriented parallel to the outer surfaces (3-1, 3-2) of the ceramics. This orientation of the platelets is maintained over the whole thickness from the surface (3-1) to the under surface (3-2) of the ceramics. Figure 6(C) is an enlarged view of Figure 6(B) and shows the effects of the platelets. In Figure 6(B), for example, when the under surface 3-2 expands thermally upon being heated rapidly, tensile stress is applied to the surface of the ceramics 3-1. However, the high strength platelets 10 withstanding this stress, reduce the tensile strength applied to the matrix 11, thereby preventing defects such as cracks. As shown in Figure 6(C), even if micro-cracks 12 are produced in the matrix 11, the platelets 10 prevent further crack growth when the micro-cracks 12 reach the platelets 10, thereby protecting the matrix from cracks. Thus the platelets improve the thermal shock resistance of the ceramics remarkably. The platelets whose plate surfaces are oriented in the same direction as the outer surfaces 3-1 and 3-2, that is, parallel thereto, protect the matrix most effectively from the tensile stress applied to the surfaces of the ceramics. A ceramic composite article comprising such a matrix exhibits an excellent thermal shock resistance because the plate surfaces of all the dispersed platelets are oriented in the same direction as the outer surfaces of the ceramic article.

The relative density of the sintered ceramics is 85% and above. According to the knowledge of the present inventor et al., a ceramics composite article with a relative density of below 85% exhibits low bending strength and low toughness, but by improving the relative density to 85% and above, satisfactory material properties can be obtained.

In the following, a method for making a ceramic article reinforced with the platelets is described.

In a first process for example, a desired amount of 30% by volume and below of the platelets is mixed with the ceramics powder, and this mixture and a sintering aid are added to a dispersive medium, thereby obtaining a slip with a viscosity of 0.5 Nm$^{-2}$s (5 poise) and below.

Viscosity of the slip means a viscosity measured with a rotation viscometer calibrated with the standard liquid for viscosity calibration of JIS Z 8809.

The platelets may be mixed in an amount of 30% by volume and above, but since the bending strength of the sintered ceramics would be reduced thereby, an amount of 30% by volume and above, but since the bending strength of the sintered ceramics would be reduced thereby, an amount of 30% by volume and below is preferable. As a sintering aid, for example, alumina, yttria, etc. can be used.

As a dispersive medium, water or a nonaqueous solvent such as alcohol can be used. In the present invention the viscosity of the slip shall be 0.5 Nm$^{-2}$s (5 poise) and below, the reason for which is described as follows: in a second process, the slip made in the first process is poured into a hygroscopic, for example, gypsum mould and held therein. A build-up layer is formed, and the rest of the slip is removed. The present inventor et al. performed the second process using slips of various viscosity in order to obtain build-up layers with thicknesses between 10 and 30 mm. For a slip with a viscosity of above 0.5 Nm$^{-2}$s (5 poise), only a part of the platelets includes plate surfaces oriented parallel to the outer surfaces of the ceramic article, but most of the platelets have plate surfaces oriented randomly in three-dimensions.

Figure 7 shows the orientation of the platelets when using a slip with a viscosity of above 0.5 Nm$^{-2}$s (5 poise). The platelets near the gypsum mould 13, for example 1-1, include plate surfaces oriented parallel to the outer surfaces (gypsum mould and wall surface) 3-1 of the ceramic article, but the platelets of the build-up part away from the gypsum mould 13, for example 1-2, include plate surfaces oriented randomly in three-dimensions.

The orientation of the plate surfaces of the platelets is regulated over the whole thickness from the surface to the under surface of the ceramics. For this purpose a slip with a viscosity of 0.5 Nm$^{-2}$s (5 poise) and below is used. A slip with a viscosity of 0.5 Nm$^{-2}$s (5 poise) and below can be attained for example by the regulation of the added amount of a dispersive medium, the regulation of pH and by the use of a dispersive medium.

In a third process, a green body is obtained by removing the build-up layer from the mould, and the green body having a relative density of 55%. If the green body has a relative density of below 55%, it is difficult to maintain the relative density of the ceramics after sintering of 85% and above stably.

A green body with a relative density of 55% and above can be attained for example by altering the particle size distribution of silicon nitride for the matrix and by adding an amount of a dispersive medium.

By sintering this green body in a non-oxidizing atmosphere under a gas pressure of $1 \times 10^5$ kgm$^{-2}$ (10 kg/cm$^2$) for example at 1600 - 1750°C, a ceramics article is obtained whose dispersed platelets include plate surfaces oriented parallel to the outer surfaces of the ceramic article and for example in a direction of 30° and below to the outer surfaces of the ceramics article, and which has a relative density of 85% and above, and are also excellent in strength as well as in thermal shock resistance.

[Example 1]

In Table 1 No. 1-1 and No. 1-2 are silicon nitride matrix/silicon carbide whisker composite articles wherein, corresponding to Figure 2, the green body is made from a slip with a viscosity of 0.30 Nm$^{-2}$s (3.0 poise) and below. These ceramic articles show a high bending strength and a superior toughness.

In Table 1 No. 2-1 and No. 2-2 are ceramic composite articles of the comparative examples, wherein, corresponding to Figure 3, a slip with a viscosity of about 1.00 Nm$^{-2}$s (10.0 poise) is used. The whiskers are oriented randomly in three-dimensions, have a low relative density, and show insufficient bending strength and toughness.

In Table 1 No. 3-1 and No. 3-2 are ceramic composite articles of the comparative examples, wherein, corresponding to Figure 4, a slip with a viscosity of about 0.50 Nm$^{-2}$s (5.0 poise) is used. At first sight the whiskers of these ceramics are oriented schematically parallel to the outer surface of the ceramics article and randomly in two-dimensions as in No. 1-1 and No. 1-2. However, because these ceramic composite articles show a large scattering of shrinkage factors in the thickness direction, the shapes of these articles are distorted and have insufficient bending strength and toughness, so that no ceramics composite articles of high-strength and superior toughness can be obtained.

Table 1

| No. of slip | Viscosity Nm⁻²s (poise) | Relative density of green body (%) | Sintering temp. (°C) | Shrinkage factor in thickness direction (%) *1 | Orientation of whiskers *2 | Ceramic composite article | | | |
|---|---|---|---|---|---|---|---|---|---|
| | | | | | | Macro defects | Relative density (%) | Bending strength MPa kgf/mm² | Fracture toughness value MPam¹ᐟ² |
| 1-1 | 0.15 (1.5) | 65 | 1650 | 14.8 ~ 15.2 | Type A | None | 95.1 | 837 (85.3) | 6.5 |
| 1-2 | 0.51 (1.5) | 65 | 1750 | 16.5 ~ 16.7 | Type A | None | 98.6 | 883 (90.0) | 6.8 |
| 2-1 | 1.00 (10.0) | 50 | 1650 | 16.4 ~ 17.8 | Type B | Yes | 87.3 | 565 (57.6) | 5.2 |
| 2-2 | 1.00 (10.0) | 50 | 1750 | 16.8 ~ 18.7 | Type B | Yes | 88.4 | 609 (62.1) | 5.3 |
| 3-1 | 0.50 (5.0) | 62 | 1650 | 13.9 ~ 15.0 | Type A | Yes | 95.2 | 745 (76.0) | 5.0 |
| 3-2 | 0.50 (5.0) | 62 | 1750 | 16.0 ~ 17.1 | Type A | Yes | 97.8 | 777 (79.2) | 5.7 |

*1: [{(Green body thickness) - (Ceramics composite thickness)}/(Green body thickness)] × 100, Max ... Min

*2: Type A .... Orientation in Fig. 2, Type B .... Orientation in Fig. 3

[Example 2)

Silicon nitride powder, SiC whisker and a sintering aid were mixed in the weight ratio of 75 : 10 : 15, and then the mixture was placed in an alumina pot, water and a dispersing agent were added thereto, and the resulting mixture was mixed and dispersed for 46 hours. The viscosity of this slip was 0.04 Nm⁻²s (0.4 poise).

8

As a comparative example, silicon nitride powder and a sintering aid were mixed in the weight ratio of 85 : 15, and a slip of the comparative example was produced in the same way. The viscosity of the slip of the comparative example was 0.06 Nm$^{-2}$s (0.6 poise).

Each of the slips was poured respectively into a crucible-forming gypsum mould of 70 mm in diameter and 100 mm in height having a shape shown in Figure 5, and was solidified to a thickness of about 7 mm to the mould surface. Thereafter an unsolidified slip was removed. The relative density of the moulded crucible-like green body was 62.8% in the present invention, and was 65.5% in the comparative example. These green bodies were sintered in a nitrogen atmosphere of 0.1 MPa (1 atm) at 1700°C for 3 hours. Both of the crucibles could be sintered without getting out of shape. In the crucible containing no SiC whisker the shrinkage factor in the height direction was almost the same as that in the thickness direction, but the crucible containing 10% of SiC showed 1.6 times more shrinkage in the thickness direction than in the height direction.

A test piece 8 of 3 x 4 x 40 mm was cut out from the side wall of each crucible, polished and its structure observed under an optical microscope. In the test piece cut out from the crucible containing SiC whiskers it was confirmed that the whiskers are oriented parallel to the wall surface. Subsequently, a heat impact text was performed on each test piece. This test comprises dropping a test piece held at a constant temperature into cold water (20°C), quenching it, measuring its strength by a three-point bending test and obtaining a critical thermal shock temperature difference (ΔTc). According to the results of this heat impact test, the crucible containing 10% of SiC whisker can tolerate a quenching temperature difference of 950°C, and the crucible containing no SiC whisker a difference of 800°C. In the test piece containing no whiskers cracks appeared in a direction passing through the wall of the crucible, however, in the test piece containing whiskers cracks grew in a direction like a peeling, which showed that the cracks do not easily grow to a fatal rupture.

[Example 3]

Silicon nitride powder with an average particle size of 1.0 $\mu$m, SiC platelets (made by American Matrix Co., Ltd.) with an average plane diameter (average diameter of the plates surfaces of the platelets) of 25 $\mu$m and with an average thickness of 1 $\mu$m, and a cordierite-group sintering aid were prepared in a ratio of 77 : 10 : 13, water was added thereto and the preparation was mixed sufficiently, thereby obtaining a slip. By adding various regulated amounts of CMC (a bonding agent improving the strength of a green body and not taking part in sintering) to the slip, the slips with different viscosities shown in No. 1 - No. 4 of Table 2 were made. No. 5 of Table 2 is a slip with a lower viscosity made by adding water to No. 4 slip. These slips were poured in the gypsum moulds, thereby obtaining disk-like green bodies of 60 mm in diameter x 6 mm. Sintered bodies were made by sintering these green bodies at 1700°C for 3 hours under a nitrogen atmosphere.

The relative density, three-point bending strength (JIS-method) and fracture toughness value (SEPB-method) were measured. The orientation of the SiC platelets was also observed under the optical microscope. The results thereof are shown in Table 2. The three-point bending strength and fracture toughness value in Table 2 were measured in the direction in which the surfaces parallel to the water-absorbing sides of the gypsum mould are taken as a pressure applying surface.

As shown in Table 2, No. 1, No. 2 and No. 3 a platelets orientation of A and a relative density of 85% and above, give ceramic articles having an excellent bending strength and an excellent fracture toughness value.

## Table 2

| No. | Viscosity of slip $Nm^{-2}$ s (poise) | Relative density of green body (%) | Ceramic articles after sintering | | | | |
|---|---|---|---|---|---|---|---|
| | | | Orientation of whiskers *1 | Relative density (%) | Bending strength $Kgm^{-2} \times 10^7$ (kg/mm²) | Fracture toughness value (MPam$^{1/2}$) | Thermal shock resistance temp. difference (°C) |
| 1 | 0.05 (0.5) | 66 | A | 97.6 | 6.37 (63.7) | 7.5 | 900 |
| 2 | 0.10 (1.0) | 65 | A | 95.4 | 6.41 (64.1) | 7.1 | 900 |
| 3 | 0.40 (4.0) | 61 | A | 93.2 | 6.05 (60.5) | 7.2 | 850 |
| 4 | 1.00 (10.0) | 58 | B | 89.5 | 5.87 (58.7) | 5.6 | 650 |
| 5 | 0.25 (2.5) | 53 | A | 83.8 | 5.00 (50.0) | 5.3 | 600 |

*1    A: Platelets are oriented as shown in Fig. 1,

      B: Platelets are oriented as shown in Fig. 2

[Example 4]

Silicon nitride powder with an average particle size of 1.0 um, BN platelets (UHPS1 made by Showa Denko Co., Ltd.) with an average plane diameter of 1.5 um and with an average thickness of 0.4 um, and a cordierite-group sintering aid were prepared in a ratio of 75 : 10 : 15, and water was added thereto, thereby obtaining a slip. No. 10 of Table 3 was obtained by drying the slip, grinding to 0.4 mm (60 mesh) and below, and by forming into a disk of 60 mm in diameter x 6 mm by means of pressing of $1 \times 10^7$ kgm$^{-2}$ (1 ton/cm$^2$). For No. 6 - No. 9 of Table 3, the viscosities thereof were regulated in the same way as in [Example 1], and disk-like green bodies of 60 mm in diameter x 6 mm were made by pouring into the gypsum moulds. These green bodies were sintered at 1700 ° C for 5 hours under a nitrogen atmosphere. The relative density, three-point bending strength and thermal shock resistance temperature difference of the sintered bodies were measured, and the results thereof are shown in Table 3.

As shown in Table 3, No. 6, No. 7 and No. 8 are excellent in bending strength and thermal shock resistance.

Table 3

| No. | Viscosity of slip (Nm⁻²s (poise)) | Relative density of green body (%) | Orientation of whiskers *2 | Ceramic articles after sintering | | |
|---|---|---|---|---|---|---|
| | | | | Relative density (%) | Three-point bending strength ($Kgm^{-2} \times 10^7$ (kg/mm²)) | Thermal shock resistance temp. difference (°C) |
| 6 | 0.03 (0.3) | 58 | A | 87.0 | 5.8 (58) | 1000 |
| 7 | 0.10 (1.0) | 56 | A | 85.6 | 5.1 (51) | 1000 |
| 8 | 0.30 (3.0) | 55 | A | 85.1 | 4.8 (48) | 950 |
| 9 | 0.85 (8.5) | 52 | B | 81.1 | 3.5 (35) | 700 |
| 10 | Pressing | 51 | B | 77.8 | 3.3 (33) | 650 |

*2  A: Platelets are oriented as shown in Fig. 1,

B: Platelets are oriented as shown in Fig. 2

[Example 5]

Silicon nitride powder (mean particle diameter: about 1.0 $\mu$m), silicon carbide whisker (diameter: about 1 $\mu$m, length: about 10 $\mu$m) and a sintering aid were prepared in a weight ratio of 75 : 10 : 15, water and a dispersive medium were added thereto, and then the preparation was dispersed and mixed for about 50 hours, thereby obtaining a slip with a viscosity of about 0.05 $Nm^{-2}s$ (0.5 poise). This slip was poured into the gypsum mould of 150 mm in diameter and 300 mm in height shown in Figure 8 including a mould surface, a solid layer of about 10 mm in thickness was built up on the mould surface, and any unsolidified slip was removed.

The relative density of the formed cylindrical green body was 63.2%. By sintering this green body under a nitrogen atmosphere at 1700°C for 3 hours, a ceramic article for use as a cylinder liner was made. In this ceramics the silicon carbide whiskers were oriented in the same direction as to the inner surfaces of the cylinder liner. The properties of this cylinder liner are shown in Table 4. In Table 4 the bending strength was determined by JIS three-point bending method, the fracture toughness value by SEPB method, and the thermal shock resistance value was determined by submerged quenching method. In the abrasion test the article was polished to a mirror-like state on the inner surface of the cylinder liner, then a normal-pressure sintered silicon nitride pressure-applying body was slid axially 10,000 times along the inner surface of the cylinder liner.

Comparative Example 1 is a cylindrical ceramic article made in the same processes as the cylinder liner of the above described example except that silicon nitride powder and a sintering aid were prepared in a weight ratio of 90 : 10 without using silicon carbide whiskers.

Comparative Example 2 is a cylindrical ceramic article whose raw materials were prepared in the same ratio as in the cylinder of the above described example and which was made in the same processes as in the example except that a slip with a viscosity of 0.35 $Nm^{-2}s$ (3.5 poise) was made and this slip was used. In Comparative Example 2 the green body had a relative density of 54%, and the whiskers in the matrix were oriented at random.

As seen in Table 4, the cylinder liner embodying the present invention has a high relative density as a sinter, and is also excellent in strength, fracture toughness value and thermal shock resistance value. According to the result of the abrasion test, the abrasion loss of a piston is small, and thus this example has excellent properties as a cylinder liner.

Comparative Example 1 exhibits low bending strength and fracture toughness value as a sinter, and is also inferior in thermal shock resistance value because it contains no whiskers. Accordingly, Comparative Example 1 is unsuitable for a cylinder liner.

Comparative Example 2 has a low relative density as a sinter, and is also insufficient in bending strength and fracture toughness value, although it contains whiskers. In Comparative Example 2 the whiskers were oriented at random, so that the abrasion loss of the piston in the abrasion test was large.

Table 4

| | Relative density (%) | Bending strength $(Kgm^{-2} \times 10^{-7})$ $(Kg/mm^2)$ | Sintered body | | |
| | | | Fracture toughness value $MPa \cdot m^{1/2}$ | Thermal shock resistance value (°C) | Abrasion test * |
|---|---|---|---|---|---|
| Cylinder liner embodying the present invention | 98 | 9.3 (93) | 6.3 | 950 | ⊗ |
| Comparative example (1) | 99 | 8.1 (81) | 5.5 | 800 | × |
| Comparative example (2) | 94 | 6.5 (65) | 4.8 | 850 | × |

* ⊗: Little abrasion ×: Much abrasion

[Example 6]

In Table 5, No. 1 is a conventional example and was formed from a slip comprising silicon nitride and a sintering aid. It is a three-way coupling whose dimensions are shown in Figure 9. No. 2 is an example

13

embodying the present invention and is a three-way coupling of the same dimensions formed from a slip comprising silicon nitride, a sintering aid and 10% of silicon carbide whiskers. No. 1 and No. 2 were sintered at 1750°C for 4 hours respectively. These three-way couplings were made in a reversed T form as shown in Figure 9 and tested by pouring molten Aluminium (750°C, 5 kg) repeatedly from above. In this test the three-way couplings were not preheated, and when they were cooled down completely to room temperature after each pouring, before the next pouring was performed.

In this test, since the inner surfaces of a three-way coupling were heated rapidly, No. 1, a conventional three-way coupling, was broken after 35 pourings. However, No. 2, a three-way coupling embodying the present invention, could withstand these thermal shocks, and no damage was found even after 100 pourings.

Table 5

|  | Silicon Nitride (%) | Sintering Aid (%) | SiC Whisker (%) | Relative density of sintered body (%) | Test Result |
|---|---|---|---|---|---|
| No. 1 | 85 | 15 | 0 | 99.1 | Broken after 35 times |
| No. 2 | 75 | 15 | 10 | 98.5 | No damage after 100 times |

[Example 7]

In Table 6 No. 1 is a stoke whose green body was formed from a slip comprising only silicon nitride. It is dense, but exhibits a low shown resistance.

Although No. 2 is a stoke whose green body was formed from a slip containing 15% of silicon carbide whiskers, since a slip with a viscosity of 1 Nm$^{-2}$s (10 poise) was used, the silicon carbide whiskers were oriented at random. But this stoke has a low relative density and is also insufficient in shock resistance.

In No. 3, a stoke according to the present invention, whose green body was formed using a slip with a viscosity of 0.12 Nm$^{-2}$s (1.2 poise) and containing 15% of whiskers. The silicon carbide whiskers were dispersed and oriented in an inclined angle of 30° and below to the inner and outer surfaces of the stoke over the whole thickness from the inner surfaces to the outer surface of the stoke, and no damage was produced. This stoke has a high relative density and is also excellent in shock resistance.

EP 0 377 317 B1

## Table 6

| No. | Dispersed condition of whiskers | Relative density of stoke | Fracture toughness value *1 | Thermal shock resistance temp. difference *2 |
|---|---|---|---|---|
| 1 | No whiskers | 98% | 5.4 | 700°C |
| 2 | Three-dimensional random | 82% | 5.0 | 750°C |
| 3 | Embodying Present invention | 95% | 6.6 | 950°C |

*1: Fracture toughness value was measured by SEPB method, $MPam^{1/2}$

*2: Thermal shock resistance temperature difference was measured by submerged quenching method.

[Example 8]

In Table 7 No. 1 is a stoke (shown in Figure 11) with the number 14 whose green body was formed from a slip comprising only silicon nitride and was sintered under a normal pressure. It has low yields of about 50% both in forming and sintering, and its lifetime is also short.

Although No. 2 is a stoke whose green body was formed from a slip containing 15% of SiC whiskers, it has a lower yield than No. 1. Since a slip with a viscosity of 1 Nm$^{-2}$s (10 poise) was used, the SiC whiskers are oriented randomly in three-dimensions and the green body has low relative density and strength, and the stoke showed a much shorter lifetime.

No. 3 is a stoke formed from a slip containing 15% of SiC whiskers, but having a viscosity of 0.5 Nm$^{-2}$s (5 poise). Most of the SiC whiskers were oriented parallel to the outer surfaces, but a partly distributed orientation was observed particularly at the flange part of the stoke. This stoke had a higher yield and a longer lifetime than No. 1.

No. 4 is a stoke embodying the present invention containing 15% of whiskers. However, even at the flange part from the inner surface to the outer surface of the stoke, the SiC whiskers were dispersed and oriented parallel to the wall surfaces of the stoke, that is, in an inclined angle of 30° and below to the inner and outer surfaces of the stoke as well as to the flange surfaces over the whole thickness. This stoke has remarkable improved yields in forming and sintering, and its lifetime is also much longer.

Table 7

| No. | Whisker | Viscosity of slip Nm$^{-2}$s | Relative density of sintered body | Forming yield | Sintering yield | Lifetime |
|---|---|---|---|---|---|---|
| 1 | No whiskers | - | 98% | 50% | 50% | 2 Months |
| 2 | Three-dimensional random | (10 poise) 1 | 82% | 30% | 40% | 0.5 Month |
| 3 | Parallel to outer surface partly disturbed orientation | (5 poise) 0.5 | 89% | 80% | 90% | 5 Months |
| 4 | Parallel to outer surface | (2 poise) 0.2 | 95% | 95% | 95% | 10 Months |

[Example 9]

In Table 8 No. 1 is a heater tube whose green body was formed from a slip comprising only silicon nitride. It is dense, but has a low shock resistance. Although No. 2 is a heater tube whose green body was formed from a slip containing 15% of silicon carbide whiskers, since a slip with a viscosity of 1 Nm$^{-2}$s (10 poise) was used, the silicon carbide whiskers were oriented at random. This heater tube has a low relative density and is also insufficient in shock resistance.

No. 3 is a heater tube embodying the present invention, whose green body was formed using a slip with a viscosity of 0.12 Nm$^{-2}$s (1.2 poise) and containing 15% of whiskers, and the silicon carbide whiskers were dispersed and oriented parallel to the wall surfaces of the heater tube, that is, in an inclined angle of 30° and below to the inner and outer surfaces of the tube over the whole thickness from the inner surface to the outer surface of the tube, and no macro defects were produced. This heater tube has a high relative density and is also excellent in shock resistance.

Table 8

| No. | Dispersed condition whiskers | Relative of density heater tube | Fracture of toughness value *1 | Thermal shock resistance temperature difference *2 |
|---|---|---|---|---|
| 1 | No whiskers | 98% | 5.4 | 700°C |
| 2 | Three-dimensional random | 82% | 5.0 | 750°C |
| 3 | Embodying present invention | 95% | 6.6 | 950°C |

*1 Fracture toughness value was measured by SEPB method.

*2 Thermal shock resistance temperature difference was measured by submerged quenching method.

[Example 10]

Pots 15 of No. 1 - No. 4 shown in Table 9 were made (shown in Figure 12). Each pot has an inner diameter of 70 mm and a cylindrical part height of 110 mm. High-strength silicon nitride balls 16 (diameter: 10 mm) were put into each pot, and the pots were rotated at 100 rpm for 500 hours. Subsequently, the weight of a pot after use was subtracted from the weight thereof before use, which results are shown as abrasion loss in Table 9.

In Table 9 No. 1 is a pot embodying the present invention wherein silicon carbide whiskers are dispersed in silicon nitride, and since a slip with a viscosity of 0.30 Nm$^{-2}$s (3.0 poise) and below was used, the whiskers were dispersed and oriented parallel to the inner surface of the pot as well as at random in two-dimensions. This pot had a sintering density of 96% and was thus dense. As seen in the column "abrasion loss" of Table 9, this pot was remarkably superior in abrasion resistance to Comparative Examples No. 2 - No.4.

In Table 9 No. 2 is a pot wherein silicon carbide whiskers are dispersed in silicon nitride, however, since a slip with a high viscosity was used, the whiskers were oriented at random in three-dimensions, and this pot has a low sintering density, which results in a larger abrasion loss of No. 2 than No. 1.

In Table 9 No.3 is a conventional silicon nitride-group pot, and its abrasion loss is larger than No. 1.

In Table 9 No. 4 is a conventional alumina-group pot, and its abrasion loss is also larger than No. 1. As described above, pot No. 1, embodying the present invention, had excellent abrasion resistance.

Table 9

| No. | Composition (wt.%) | | | | Viscosity of slip (poise) $Nm^{-2}$ s | Relative density of sintered body (%) | Abrasion loss (g) |
|---|---|---|---|---|---|---|---|
| | $Si_3N_4$ | SiC | $Al_2O_3$ | Aid | | | |
| 1 | 75 | 10 | - | 15*1 | 0.12 (1.2) | 96 | 0.6 |
| 2 | 75 | 10 | - | 15*1 | 1.00 (10.0) | 82 | 2.6 |
| 3 | 85 | - | - | 15*1 | 0.15 (1.5) | 98 | 1.3 |
| 4 | - | - | 90 | 10*2 | 0.15 (1.5) | 97 | 6.4 |

*1: Cordierite-group sintering aid    *2: $SiO_2$-group aid

[Example 11]

The same pots were used as in No. 1, No. 3 and No. 4 of Table 9. They were divided longitudinally into two halves respectively, and the inner surfaces of the pots were examined for the abrasion resistance and shock resistance thereof. In Table 10 No. 11 is a pot embodying the present invention and corresponds to No. 1 of Table 9. No. 13 is a conventional pot wherein no whiskers are dispersed, corresponding to No. 3 of Table 9. No. 14 is an example of alumina-group pots, corresponding to No. 4 of Table 9. In Table 10 the abrasion resistance was determined by a pin-on-disk method wherein a silicon nitride pin was moved axially on the pot, and relative values are shown for 100 of an alumina test piece. In Table 10 the shock resistance values were obtained by a measuring method wherein alumina-group balls with a diameter of 25 mm were dropped.

As seen in Table 10, No. 11 embodying the present invention was excellent both in abrasion resistance and shock resistance compared to No. 13 and No. 14.

Table 10

| No | Composition (wt.%) | | | | Viscosity of slip (poisc) $Nm^{-2}$ s | Relative density of sintered body (%) | Abrasion resistance (%) | Shock resistance |
|---|---|---|---|---|---|---|---|---|
| | $Si_3N_4$ | SiC | $Al_2O_3$ | Aid | | | | |
| 11 | 75 | 10 | - | 15*1 | (1.2) 0.12 | 96 | 30 | No damage observed after 1,000 times |
| 13 | 85 | - | - | 15*1 | (1.5) 0.15 | 98 | 70 | Small-chips produced after 480 times |
| 14 | - | - | 90 | 10*2 | (1.5) 0.15 | 97 | 100 | Small-chips produced after 30 times |

*1: Cordierite-group aid    *2: $SiO_2$-group aid

Thus ceramics articles of high strength and superior toughness can be produced by methods embodying the present invention. Such ceramics articles of high strength and superior toughness can be produced by forming and sintering under normal pressure without using a hot press method or an HIP-method. By forming and sintering under normal pressure, it is possible to produce these ceramics with simple facilities cheaply and with complicated shapes.

## Claims

1. A method of making a ceramic composite article having dispersed whiskers oriented parallel to the outer surface of the ceramic article and also in two-dimensionally random directions, characterized in performing a step of obtaining a slip with a viscosity of 0.30 $Nm^{-2}s$ (3.0 poise) and below by dispersing whiskers and ceramic powder in a dispersive medium, a step of forming a green body with a relative density of 60% and above under normal pressure by pouring said slip in a porous mould, and a step of sintering said green body in a non-oxidizing atmosphere under a normal pressure of 1 x $10^5$ $kgm^{-2}$ (10 kg/cm$^2$) and below.

2. A method of making a ceramic composite article according to claim 1, <u>characterised in that</u> the ceramic powder comprises silicon nitride.

3. A method of making a ceramic composite article with dispersed platelets having plate surfaces oriented in the same direction as the outer surfaces of said ceramic article and having a relative density of 85% and above, which method is characterised in performing a first step of obtaining a slip with a viscosity of 0.5 $Nm^{-2}s$ (5 poise) and below by dispersing platelets and ceramic powder in a dispersive medium, a second step of forming a green body with a relative density of 55% and above under normal pressure by pouring said slip into a porous mould, and a third step of sintering said green body in a non-oxidizing atmosphere under a normal pressure of 1 x $10^5$ kgm$^{-2}$ (10 kg/cm$^2$) and below.

4. A method of making a ceramic composite article according to claim 3, <u>characterised in that</u> the platelets comprise silicon carbide or boron nitride, and the ceramic powder forming the main phase of the matrix comprises silicon nitride powder.

## Patentansprüche

1. Verfahren zur Herstellung von Artikeln aus einer Keramikmischung aus dispergierten kurzfasrigen Büscheln, die parallel zur äußeren Oberfläche des Artikels und in zwei Zufallsrichtungen orientiert sind, <u>dadurch gekennzeichnet</u>, daß eine Probe mit einer Viskosität von 0,30 $Nm^{-2}s$ (3.0 poise) und weniger durch Dispersion von Büscheln und Keramikpulver in einem Dispersionsmedium geschaffen wird, daß ein Rohling mit einer relativen Dichte von 60% und mehr unter Normaldruck durch Gießen der Probe in eine poröse Form geschaffen wird und daß der Rohling in einer nicht-oxidierenden Atmosphäre unter Normaldruck von 1 x $10^5$ $kgm^{-2}$ (10 kg/cm$^2$) und weniger gesintert wird.

2. Verfahren nach Anspruch 1, <u>dadurch gekennzeichnet</u>, daß das Keramikpulver Silizium-Nitrid enthält.

3. Verfahren zur Herstellung von Artikeln aus einer Keramikmischung mit dispergierten Plättchen, deren Oberflächen in der gleichen Richtung wie die äußere Oberfläche des Artikels orientiert sind, und mit einer relativen Dichte von 85% und mehr, <u>dadurch gekennzeichnet</u>, daß eine Probe mit einer Viskosität von 0,5 $Nm^{-2}s$ (5 poise) und weniger durch Dispersion von Plättchen und Keramikpulver in einem Dispersionsmedium geschaffen wird, daß ein Rohling mit einer relativen Dichte von 55% und mehr unter Normaldruck durch Gießen der Probe in eine poröse Form geschaffen wird und daß der Rohling in einer nicht-oxidierenden Atmosphäre unter Normaldruck von 1 x $10^5$ $kgm^{-2}$ (10 kg/cm$^2$) und weniger gesintert wird.

4. Verfahren nach Anspruch 3, <u>dadurch gekennzeichnet</u>, daß die Plättchen Silizium-Karbid oder Bor-Nitrid und das Keramikpulver, das die Hauptphase der Matrix bildet, Silizium-Nitrid-Pulver enthält.

## Revendications

1. Procédé pour fabriquer un article composite céramique, dans lequel sont dispersés des whiskers orientés parallèlement à la surface extérieure de l'article céramique et également dans des directions aléatoires d'une manière bidimensionnelle, caractérisé par la mise en oeuvre d'une étape d'obtention d'une masse possédant une viscosité de 0,30 $Nm^{-2}s$ (3,0 poises) et moins par dispersion de whiskers et d'une poudre céramique dans un milieu dispersif, une étape de formation d'un corps à vert possédant une densité relative égale à 60 % et plus, à la pression normale, en introduisant ladite masse dans un moule poreux, et une étape de frittage dudit corps à vert dans une atmosphère non oxydante sous une pression normale de 1 x $10^5$ kgm$^{-2}$ (10 kg/cm$^2$) et moins.

2. Procédé pour fabriquer un article composite céramique selon la revendication 1, caractérisé en ce que la poudre céramique comprend du nitrure de silicium.

3. Procédé pour fabriquer un article composite céramique contenant des plaquettes dispersées possédant des srufaces planes orientées dans la même direction que les surfaces extérieures dudit article céramique et possédant une densité relative égale à 85 % et plus, le procédé étant caractérisé par la mise en oeuvre d'une première étape d'une masse possédant une viscosité égale à 0,5 Nm$^{-2}$s (5 poises) et moins par dispersion de plaquettes et d'une poudre céramique dans un milieu dispersé, selon l'étape de formation d'un corps à vert possédant une densité relative égale à 55 % et plus, à la pression normale, moyennant l'introduction de ladite masse dans un moule poreux, et une troisième étape de frittage dudit corps à vert dans une atmosphère non oxydante sous une pression normale de 1 x $10^5$ kgm$^{-2}$ (10 kg/cm$^2$) et moins.

4. Procédé pour fabriquer un article céramique composite selon la revendication 3, caractérisé en ce que les plaquettes comprennent du carbure de silicium ou du nitrure de bore, et que la poudre céramique constituant la phase principale de la matrice comprend une poudre de nitrure de silicium.